# EUROPÄISCHE PATENTSCHRIFT

(11) **EP 1 367 286 B1**
(45) Veröffentlichungstag und Bekanntmachung des Hinweises auf die Patenterteilung: **09.02.2005**
(21) Anmeldenummer: 03009459.3
(22) Anmeldetag: 25.04.2003
(51) Int. Cl.: F16F 9/05, F16F 9/38, F16F 9/58

(54) **Federungseinrichtung**
Suspension system
Système de suspension

(30) Priorität: 01.06.2002 DE 10224442
(43) Veröffentlichungstag der Anmeldung: 03.12.2003
(73) Patentinhaber: ContiTech Luftfedersysteme GmbH, 30165 Hannover (DE)
(72) Erfinder: Bank, Christoph, 31275 Lehrte (DE); Thurow, Gerhard, 30823 Garbsen (DE); Cerny, Paul, 30974 Wennigsen (DE); Luncz, Helmut, 70825 Korntal 2 (DE); Zeltlitz, Andreas, 74397 Pfaffenhofen (DE)

(56) Entgegenhaltungen:
- WO-A-01/14765
- DE-A- 2 759 435
- DE-A- 19 913 754
- DE-A- 19 952 799
- DE-A- 19 952 919
- FR-A- 1 482 824

## Beschreibung

Die Erfindung betrifft eine Federungseinrichtung gemäß den Merkmalen des Oberbegriffs des Anspruchs 1, siehe WO 01/14765 A1.

Aus der DE 199 52 799 A1 ist eine Federungseinrichtung bekannt, die aus zwei spiegelbildlich zueinander angeordneten Luftfederelementen aufgebaut ist. Jedes der beiden Federelemente besteht im wesentlichen aus einem Rollbalg und einem Abrollkolben. Zur seitlichen Begrenzung und als Gegenlager zu den beiden Abrollkolben ist ein (gemeinsamer) Außenmantel vorgesehen, an dem die Rollbälge ebenfalls abrollen. Die beiden Rollbälge können ein einziges Stück bilden. Die Abrollkolben sind endseitig und der Außenmantel ist beidendig leicht konisch ausgebildet.
Der zwischen Abrollkolben und Außenmantel bestehende Ringspalt ist offen. Ein Schutz gegen Staub und ist nicht vorhanden. Damit besteht die Gefahr einer Verschmutzung der empfindlichen Rollbalg-Abrollfläche. Bei einem verschmutzten Rollbalg ist die Zuverlässigkeit nicht mehr gewährleistet. Dadurch wird die zu erwartende Lebensdauer drastisch reduziert.

Aus der DE 100 24 572 A1 ist ein Feder-Dämpfersystem mit einem Doppelrollbalg bekannt. Dieses weist zwei axial gegenüber angeordnete Abrollkolben auf, an denen jeweils ein Schlauchrollbalg abrollen kann. Dabei sind die Schlauchrollbälge jeweils einerseits an einem Abrollkolben und andererseits miteinander über eine Verbindungsmuffe verbunden.

Aus der DE 199 13 754 A1 ist ein Federelement für eine Luftfederung bekannt. Das Federelement ist durch einen inneren, materialschwächeren und verformungswilligeren, schlauchförmigen ersten Rollbalg und einen äußeren, geometrisch im wesentlichen zum ersten Rollbalg gleichen zweiten Rollbalg gebildet, wobei der zweite Rollbalg als Außenführung für den ersten Rollbalg dient.

Aufgabe der Erfindung ist es, eine gattungsgemäße Federungseinrichtung anzugeben, die durch einfache konstruktive Mittel eine höherer Lebenserwartung aufweist.

Diese Aufgabe wird durch den Hauptanspruch gelöst. Mit der im Patentanspruch 1 angegebenen Erfindung wird ein Verschmutzen der innenliegenden Bauteile, insbesondere ein Verschmutzen der Rollbalg-Abrollfläche(n), vermieden. Dies wird durch einen erfindungsgemäß zwischen einem der Abrollkolben und dem Außenmantel angeordneten Schmutzbalg erreicht.

Dabei ist die wirksame Länge des einerseits im Bereich eines Abrollkolbens und andererseits am Außenmantel eingespannten Schmutzbalgs etwas geringer als die wirksame Länge des kürzeren der beiden Arbeitsbälge. Auf diese Weise dient der Schmutzbalg zudem als Endanschlag (Zuganschlag). Dass sich damit ein geringfügig kürzerer maximaler Hub (Federweg) ergibt, ist ohne Belang.

Durch die Verwendung von Spannringen und mit den Spannringen zusammenwirkenden Adaptern wird vorzugsweise eine luftdichte Anlage des Rollbalgs an dem Abrollkolben bzw. am Außenmantel erreicht, die auch bei Aufbringen einer Zug- bzw. Druckkraft am Rollbalg ein relatives Verrutschen wirksam verhindert.

Mit einer gezielten Anordnung von innerhalb des Schmutzbalgs angeordneten Festigkeitsträgern kann vorzugsweise die Zuganschlag-Kennlinie beeinflusst werden. Dabei können die Festigkeitsträger beispielsweise in einem Bereich von 0° bis 90° zur axialen Richtung des Schmutzbalgs im Gewebe desselben angeordnet sein. Der als Endanschlag dienende Schmutzbalg nimmt dabei sowohl statische Kräfte (z. B. beim Aufbocken des Fahrzeugs) als auch dynamische Kräfte beim übermäßigen Ausfedem auf. Damit kombiniert der Balg in vorteilhafter Weise die Eigenschaften zweier Bauteile in einem: Endanschlag und Schmutzbalg.

Um zu verhindern, dass der Schmutzbalg beim Einfedern geknautscht wird, ist er vorzugsweise so ausgebildet, dass er unter Atmosphärendruck allein abrollt. Zur Unterstützung des Abrollvorganges ist gegebenenfalls ein geringer Innen(über)druck vorgesehen. Zu diesem Zweck kann der Schmutzbalg mit einem Druckbegrenzungsventil oder einer Überdruckklappe versehen werden.

Der erfindungsgemäße Balg ist insbesondere für den Einsatz in Kraftfahrzeug-Luft- oder - Hydraulik-Federn (Medium Luft oder Öl) vorgesehen. Anwendungen für Fahrersitz-, Fahrerhaus- und Industrielagerungs-Luftfedern sind ebenfalls denkbar.

Ein Ausführungsbeispiel der Erfindung ist in der Zeichnung dargestellt und wird im folgenden näher beschrieben.

Es zeigt:
Fig. 1 den Längsschnitt durch eine erfindungsgemäße Federungseinrichtung in Konstruktionslage,
Fig. 2 den Längsschnitt durch dieselbe Federungseinrichtung im ausgefederten Zustand bei "Endanschlag".

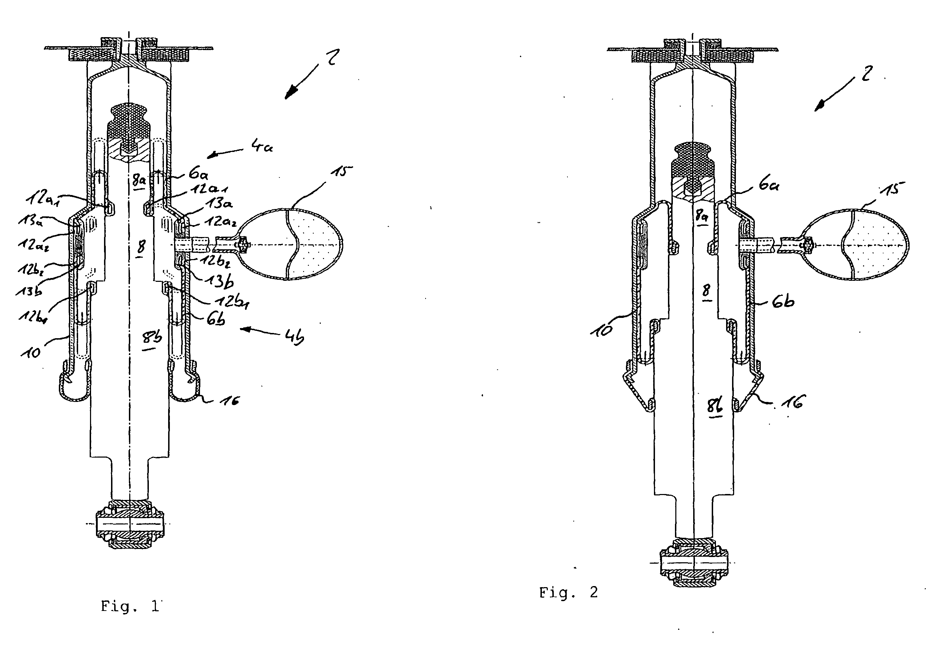

Die in Fig. 1 dargestellte Federungseinrichtung 2 ist aus zwei Federelementen 4a, 4b aufgebaut. Jedes der beiden Federelemente 4a, 4b besteht im wesentlichen aus einem Rollbalg 6a, 6b und einem Abrollkolben 8a, 8b. Auf eine bei üblichen (einfachen) Luftfedem erforderliche Abdeckplatte kann hier verzichtet werden, da ein gemeinsamer Außenmantel 10 zur seitlichen Abstützung der Rollbälge vorgesehen ist.

In dem dargestellten Ausführungsbeispiel sind die beiden Abrollkolben 8a, 8b starr miteinander verbunden und bilden einen gemeinsamen Doppelabrollkolben 8. Die beiden Rollbälge 6a, 6b können einen gemeinsamen Doppelrollbalg bilden. Die Enden der Rollbälge 6a, 6b sind einerseits jeweils mittels eines Spannringes 12a₁ bzw. 12b₁ an einem der Abrollkolben 8a bzw. 8b und andererseits jeweils mittels eines Adapters 13a bzw. 13b nebst einem dazugehörigen Spannring 12b₁ bzw. 12b₂ am Außenmantel 10 druckdicht befestigt.

Der Innenraum (Druckraum) 14 der Federungseinrichtung 2 kann mit Gas oder Hydraulikflüssigkeit gefüllt sein. Im Fall einer Füllung mit Hydraulikflüssigkeit ist ein Druckspeicher 15 erforderlich. Die Außenflächen des Abrollkolbens 8 und die Innenflächen des Außengehäuses 10 der beiden Federelemente 4a, 4b sind asymmetrisch zueinander ausgestaltet. Dies kann in der Weise geschehen, dass der Doppelabrollkolben 8 und/oder der gemeinsame Außenmantel 10 konisch ausgebildet ist (sind) oder - wie hier - die Oberfläche des Doppelabrollkolbens 8 und die Innenfläche des Mantels 10 derartig ausgebildet sind, dass die beiden zwischen Kolben 8 und Mantel 10 abrollenden Doppelrollbalghälften 6a, 6b zueinander unterschiedliche Wirkradien aufweisen.

Wird der radseitig befestigte Doppelkolben 8 axial relativ zum chassisseitigen Mantelzylinder 10 bewegt, so rollen die beiden zwischen Kolben 8 und Mantelzylinder 10 befindlichen Rollbälge 6a, 6b einerseits auf der Außenfläche des Kolbens 8 und andererseits auf der Innenfläche des Mantelzylinders 10 ab. Die sich bei Druckbeaufschlagung der Rollbälge 6a, 6b mit Druckluft bzw. Hydraulikflüssigkeit ergebenden axialen Krümmungsradien sind der Differenz der wirksamen Rollbalg-Krümmungsradien proportional.

Erfindungsgemäß ist zwischen dem Abrollkolben und dem unteren Ende des Außenmantels 10 ein "Schmutzbalg" 16 angebracht. Durch den Schmutzbalg 16 wird der zwischen Abrollkolben 8 und Außenmantel 10 befindliche Ringspalt zuverlässig abgedeckt. Der Schmutzbalg 16 ist dabei so weit, dass er beim Einfederungsvorgang drucklos an der Außenfläche des Kolbens 8 abrollen kann.

In dem dargestellten Ausführungsbeispiel ist die Rollfalte des Schmutzbalgs 16 kürzer als die jeweilige Rollfalte der (Arbeits-)Rollbälge 6a, 6b. Auf diese Weise dient der Schmutzbalg 16 als Endanschlag (Fig. 2).

### Bezugszeichenliste

### (Teil der Beschreibung)

- 2: Federungseinrichtung
- 4a, 4b: Federelement
- 6a, 6b: Rollbalg, Doppelrollbalg-Hälfte, (Arbeits-)Rollbalg
- 8a, 8b: Abrollkolben
- 8: Doppelabrollkolben. Doppelkolben, Kolben
- 10: Mantelzylinder, Außenmantel, Außengehäuse
- 12a₁, 12a₂: Spannringe am Rollbalg 6a
- 12b₁, 12b₂: Spannringe am Rollbalg 6b
- 13a: Adapter am Rollbalg 6a
- 13b: Adapter am Rollbalg 6b
- 14: Innenraum des Doppelrollbalgs, Druckraum
- 15: Druckspeicher
- 16: "Schmutzbalg"

## Patentansprüche

1. Federungseinrichtung mit zwei koaxial zueinander angeordneten Federelementen (4a, 4b), die je einen Rollbalg (6a, 6b) und je einen Abrollkolben (8a, 8b) aufweisen, wobei
- die beiden Abrollkolben (8a, 8b) starr miteinander verbunden sind und einen Doppelabrollkolben (8) bilden,
- die beiden Federelemente (4a, 4b) einen gemeinsamen Außenmantel (10) aufweisen,
- die beiden Rollbälge (6a, 6b), der Doppelabrollkolben (8) und der Außenmantel (10) einen gemeinsamen, mit einem komprimierbaren Gas oder mit einer inkompressiblen Hydraulikflüssigkeit gefüllten Druckraum (14) umschließen und
- zwischen einem Abrollkolben (8a, 8b) und dem Außenmantel (10) ein Schmutzbalg (16) angeordnet ist,
**dadurch gekennzeichnet, dass**
- der Schmutzbalg (16) einerseits im Bereich des Abrollkolbens (8) und andererseits am Außenmantel (10) eingespannt ist, und
- die wirksame Länge des Schmutzbalgs (16) geringer ist als die wirksame Länge des kürzeren der beiden Rollbälge (6a, 6b), so dass der Schmutzbalg (16) als Endanschlag wirkt.

2. Federungseinrichtung nach Anspruch 1,
**dadurch gekennzeichnet, dass**
die Enden der Rollbälge (6a, 6b) einerseits jeweils mittels eines Spannringes (12a_{1;} 2b₁) an einem der Abrollkolben (8a; 8b) und andererseits jeweils mittels eines Adapters (13a; 13b) nebst jeweils einem dazugehörigen Spannring (12a₂; 12b₂) am Außenmantel (10) druckdicht befestigt sind.

3. Federungseinrichtung nach einem der Ansprüche 1 bis 2,
**dadurch gekennzeichnet, dass**
die beiden Rollbälge (6a, 6b) einen Doppelrollbalg bilden.

4. Federungseinrichtung nach einem der Ansprüche 1 bis 3,
**dadurch gekennzeichnet, dass**
der Schmutzbalg (16) Festigkeitsträger aufweist, die in axialer Richtung oder um bis zu 90° dazu geneigt angeordnet sind, wodurch die Zuganschlag-Kennlinie beeinflussbar ist.

5. Federungseinrichtung nach einem der Ansprüche 1 bis 4,
**dadurch gekennzeichnet, dass**
in dem vom Schmutzbalg (16) umschlossenen Volumen mit Hilfe eines Druckbegrenzungsventils oder einer Überdruckklappe ein leichter Überdruck herrscht, so dass der Schmutzbalg (16) beim Einfahren nicht gestaucht werden kann.

## Claims

1. Suspension device with two spring elements (4a, 4b) arranged coaxially with one another and each having a U-bellows (6a, 6b) and a rolling piston (8a, 8b),
- the two rolling pistons (8a, 8b) being rigidly connected together and forming a double rolling piston (8),
- the two spring elements (4a, 4b) having a common outer casing (10),
- the two U-bellows (6a, 6b), the double rolling piston (8) and the outer casing (10) enclosing a common pressure chamber (14) filled with a compressible gas or an incompressible hydraulic fluid and
- a dirt bellows gaiter (16) being arranged between a rolling piston (8a, 8b) and the outer casing (10),
**characterized in that**
- the dirt bellows gaiter (16) is clamped in the area of the rolling piston (8) on the one hand and to the outer casing (10) on the other, and
- the effective length of the dirt bellows gaiter (16) is less than the effective length of the shorter of the two U-bellows (6a, 6b), so that the dirt bellows gaiter (16) acts as end stop.

2. Suspension device according to Claim 1, **characterized in that** the ends of the U-bellows (6a, 6b) are each respectively fixed, pressure-tight, on the one hand by means of a clamping ring (12a₁; 12b₁) to one of the rolling pistons (8a; 8b), and on the other by means of an adapter (13a; 13b) together with an associated clamping ring (12a₂; 12b₂) to the outer casing (10).

3. Suspension device according to either of Claims 1 or 2, **characterized in that** the two U-bellows (6a, 6b) form a double U-bellows.

4. Suspension device according to any one of Claims 1 to 3, **characterized in that** the dirt bellows gaiter (16) has strengthening supports, which are arranged in an axial direction or inclined by up to 90° thereto, and which are capable of exerting an influence on the tensile impact characteristic.

5. Suspension device according to any one of Claims 1 to 4, **characterized in that** a pressure limiting valve or an overpressure valve causes a slight excess pressure to prevail in the space enclosed by the dirt bellows gaiter (16), so that the dirt bellows gaiter (16) cannot be compressed even on the run-in stroke.

## Revendications

1. Système de suspension comprenant deux éléments de suspension coaxiaux (4a, 4b), qui présentent chacun un soufflet roulant (6a, 6b) et un piston de déroulage (8a, 8b),
- les deux pistons de déroulage (8a, 8b) étant connectés rigidement l'un à l'autre et formant un double piston de déroulage (8),
- les deux éléments de suspension (4a, 4b) présentant une enveloppe extérieure commune (10),
- les deux soufflets roulants (6a, 6b), le double piston de déroulage (8) et l'enveloppe extérieure (10) enfermant un espace de pression (14) commun, rempli de gaz compressible ou d'un liquide hydraulique incompressible et
- un soufflet anti-salissures (16) étant prévu entre un piston de déroulage (8a, 8b) et l'enveloppe extérieure (10),
**caractérisé en ce que**
- le soufflet anti-salissures (16) est serré d'une part dans la région du piston de déroulage (8) et d'autre part contre l'enveloppe extérieure (10), et
- la longueur efficace du soufflet anti-salissures (16) est plus courte que la longueur efficace du plus court des deux soufflets roulants (6a, 6b), de sorte que le soufflet anti-salissures (16) agit en tant que butée de fin de course.

2. Système de suspension selon la revendication 1,
**caractérisé en ce que**
les extrémités des soufflets roulants (6a, 6b) sont chacune fixées de manière étanche à la pression d'une part au moyen d'une bague de serrage (12a₁ ; 12b₁) contre l'un des pistons de déroulage (8a ; 8b) et d'autre part au moyen d'un adaptateur (13a ; 13b) en plus d'une bague de serrage associée respective (12a₂ ; 12b₂) contre l'enveloppe extérieure (10).

3. Système de suspension selon l'une quelconque des revendications 1 à 2,
**caractérisé en ce que**
les deux soufflets roulants (6a, 6b) forment un double soufflet roulant.

4. Système de suspension selon l'une quelconque des revendications 1 à 3,
**caractérisé en ce que**
le soufflet anti-salissures (16) présente des renforcements qui sont disposés dans la direction axiale ou sont inclinés jusqu'à 90° par rapport à celle-ci, et permettent d'influencer la caractéristique de butée de traction.

5. Système de suspension selon l'une quelconque des revendications 1 à 4,
**caractérisé en ce qu'**
il règne dans le volume enfermé par le soufflet anti-salissures (16), grâce à une soupape de limitation de pression ou un clapet de surpression, une légère surpression de sorte que le soufflet anti-salissures (16) ne peut pas être comprimé lors du démarrage.
